# EUROPÄISCHE PATENTSCHRIFT

(11) **EP 1 384 144 B1**
(45) Veröffentlichungstag und Bekanntmachung des Hinweises auf die Patenterteilung: **07.11.2007**
(21) Anmeldenummer: 02729874.4
(22) Anmeldetag: 18.04.2002
(51) Int. Cl.: G06F 9/30, G06F 9/38

(54) **VERFAHREN ZUM ERKENNEN EINER KORREKTEN BEFEHLS-EINSPRUNG-ADRESSE BEI VERWENDUNG UNTERSCHIEDLICH LANGER BEFEHLSWORTE**
METHOD FOR RECOGNIZING A CORRECT INSTRUCTION ADDRESS WHEN USING INSTRUCTION WORDS OF DIFFERENT LENGTHS
PROCEDE DE RECONNAISSANCE D'UNE ADRESSE D'INSTRUCTION CORRECTE LORS DE L' UTILISATION DE MOTS D'INSTRUCTIONS DE LONGUEURS DIFFERENTES

(30) Priorität: 26.04.2001 DE 10120522
(43) Veröffentlichungstag der Anmeldung: 28.01.2004
(73) Patentinhaber: Infineon Technologies AG, 81669 München (DE)
(72) Erfinder: HARTLIEB, Heimo, A-8055 Graz (AT); SEDLAK, Holger, 85658 Egmating (DE)
(74) Vertreter: Epping - Hermann - Fischer
(86) Internationale Anmeldenummer: PCT/DE2002/001442
(87) Internationale Veröffentlichungsnummer: WO 2002/088939

(56) Entgegenhaltungen:
- EP-A- 0 073 424
- EP-A- 0 498 654
- EP-A- 0 651 322
- WO-A-96/10783
- US-A- 6 032 250

## Beschreibung

Die Erfindung betrifft ein Verfahren zum Unterscheiden einer korrekten Befehls-Einsprung-Adresse bei Verwendung unterschiedlich langer Befehlsworte gemäß Patentanspruch 1. Werden für den Befehlscode eines Prozessors unterschiedlich lange Befehlsworte verwendet, so ist es für den Programmzähler schwierig die richtige Einsprungsadresse eines Befehlswortes anzugeben. Werden Befehlsworte normaler Länge und solche mit halber Länge der normallangen Befehlsworte verwendet, so ist es möglich, daß der Adreßzähler auf die Mitte, daß heißt auf die zweite Worthälfte eines normallangen Befehlswortes den Adreßzeiger richtet. Somit kann das Befehlswort nicht korrekt ausgelesen werden. Ein solches unkorrektes Einspringen in die Mitte eines Befehlswortes wurde gemäß dem intern vorliegenden Stand der Technik bisher geduldet, da man davon ausgeht, daß sich daraus ein falscher Objektcode ergibt. Dieser würde erkannt werden und zu einer Fehlermeldung führen.

Aus der EP 0651322 A, ist bekannt, dass ein Superskalar Prozessor unterschiedlich lange Befehlsworte mit einem Startbit und einem Endbit benutzt.

Gelingt es jedoch, an eine solche unzulässige Adresse einzuspringen, ohne daß eine Fehlermeldung generiert wird, bessteht die Gefahr der mißbräuchlichen Nutzung oder Datenkorrumption.

Der Erfindung liegt somit die Aufgabe zugrunde ein Verfahren zur Erkennung korrekter Befehls-Einsprung-Adressen vorzusehen, auch wenn unterschiedliche lange Befehlsworte verwendet sind und das Einspringen an unzulässige Stellen zu unterbinden.

Diese Aufgabe wird erfindungsgemäß mit den in Patentanspruch 1 angegebenen Maßnahmen gelöst. Dadurch, daß lange beziehungsweise normal lange Befehlsworte zumindest ein erstes und ein zweites Startbit aufweisen, das halblange Befehlsworte jedoch nur ein Startbit aufweisen sind lange Befehlsworte von halblangen Befehlsworten leicht unterscheidbar, so daß das Einspringen an eine unzulässige Adresse verhinderbar ist.

Weitere vorteilhafte Ausgestaltungen sind in den Unteransprüchen angegeben. Dadurch, daß das erste Startbit am Beginn eines jeden Befehlswortes steht und das zweite Startbit zu Beginn der zweiten Befehlsworthälfte des langen Befehlswortes steht, wird beim Einspringen in die zweite Befehlsworthälfte dieses sofort als falsch erkannt. Ist das zweite Startbit gegenüber dem ersten Startbit invertiert, ist die Unterscheidung vom ersten Startbit und zweitem Startbit eindeutig und leicht realisierbar.

Nachfolgend wird die Erfindung unter Erläuterung eines Ausführungsbeispiels unter Bezugnahme auf die Zeichnung näher erläutert.

Es zeigen:
Figur 1 den Aufbau erfindungsgemäßer Befehlsworte und
Figur 2 eine Anordnung zum Durchführen des erfindungsgemäßen Verfahrens.

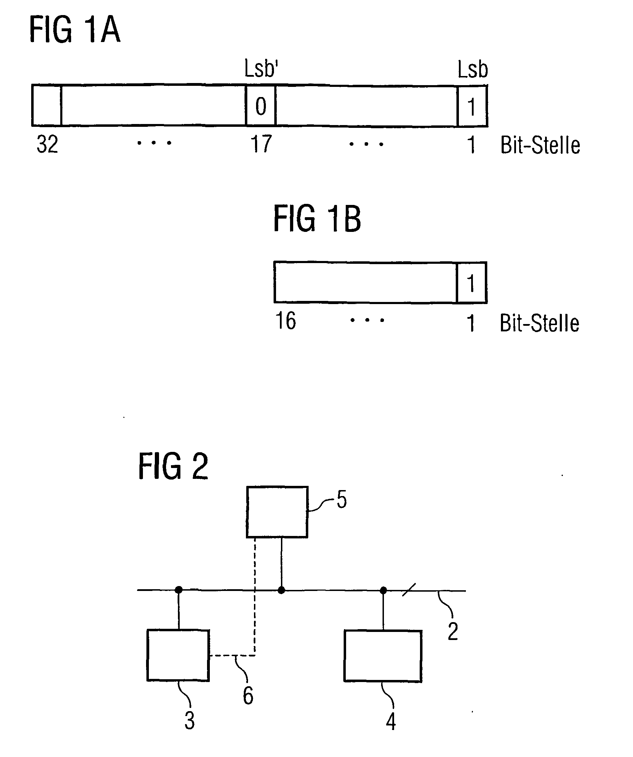

In der Figur 1 ist unter A) im Ausführungsbeispiel ein normal langes, d.h. 32 Bit langes Befehlswort symbolisch dargestellt. Dabei steht an der Stelle des niedrigsten Bits, das mit "lsb" gekennzeichnet ist und dem ersten Bit erspricht, ein Startbit, das in diesem Fall als "1" ausgebildet ist.

Beim 17. Bit handelt es sich um das Startbit der zweiten Befehlsworthälfte, das mit "lsb'" gekennzeichnet ist. Dieses Bit ist invertiert und weist somit eine "0" auf. Darunter ist unter B) ein halblanges Befehlswort dargestellt. Dieses weist an der ersten Stelle ebenfalls ein Startbit auf, das mit "lsb" gekennzeichnet ist und den Wert "1" aufweist.

Zu Beginn eines jeden Befehlswortes kann somit leicht beim Einsprung auf dieser Adresse überprüft werden, ob das vorgesehene Startbit in diesem Fall nämlich die "1" vorhanden ist. Wird in unerlaubter Weise in die Befehlswortmitte eingesprungen, nämlich zum 17. Bit, so wird das zweite Startbit, nämlich die invertierte "1", entsprechend einer "0" erkannt. Es wird somit sofort erkannt, daß es sich hierbei nicht um eine korrekte Einsprungsadresse handelt und die zweite Befehlsworthälfte wird erst gar nicht gelesen.

Auf die angegebene Weise sind lange von halblangen Befehlen leicht unterscheidbar und es ist mit einfachen Mitteln verhindert, daß in unerlaubter Weise in die Mitte eines langen Befehlswortes eingesprungen wird und ein nicht zugelassener Befehl, nämlich die zweite Befehlsworthälfte, gelesen wird.

Die Überprüfung der Adresse wird, wie in Figur 2 dargestellt, durchgeführt. Eine CPU 3, eine Speichereinheit 4 und eine Überprüfungseinheit 5 sind über einen Bus 2 mit einander verbunden. Wird beispielsweise von der CPU 3 eine Adresse über den Bus 2 an die Speichereinheit 4 gerichtet, so überprüft die Überprüfungseinheit in dem dargestellten Beispiel gemäß der zuvor angegebenen Regeln, ob die Adresse tatsächlich den Beginn eines Befehlswortes angibt. Liegt nicht der Beginn eines Befehlswortes vor, so wird dies von der Überprüfungseinheit der CPU signalisiert. Die signalisierung kann dabei über den Bus 2 oder über eine zusätzliche Signalleitung 6 erfolgen.

Die Signalisierung, daß die Adresse nicht korrekt ist, kann zur Folge haben, daß die CPU gesperrt oder rückgesetzt oder in einen anderen gewünschten Betriebszustand gesetzt wird.

Neben dem dargestellt Beispiel kann die Überprüfungseinheit Teil der Speichereinheit sein. Sie würde dann beispielsweise das Adressregister der Speichereinheit daraufhin überprüfen, ob die im Register enthaltene Adresse zulässig ist.

### Bezugszeichenliste

- lsb: Erstes Startbit
- lsb': Zweites Startbit

## Patentansprüche

1. Verfahren zum Erkennen einer korrekten Befehls-Einsprungadrease, bei Verwendung langer Befehlsworte und halblanger Befehlsworte, bei dem jedes Befehlswort ein vorbestimmtes erstes Startbit (lsb) aufweist
**dadurch gekennzeichnet,**
**dass** lange Befehlsworte ein vorbestimmtes zweites Starbit (lsb') zu Beginn der zweiten Befehlsworthälfte aufweisen, das vom ersten Startbit verschieden ist, wobei eine Überprüfungsvorrichtung an Hand des Wertes des Startbits (lsb, lsb') überprüft, ob eine Befehls-Einsprungadresse den Beginn eines Befehlswortes angibt und dann wenn nicht der Beginn eines Befehlswortes sondern das zweite Startbit vorliegt, ein Signal abgibt.

## Claims

1. Method for identifying a correct command entry address, when using long command words and half-length command words, in which each command word comprises a predetermined first start bit (lsb), **characterized in that** long command words further comprising a predetermined second start bit (1sb'), at the beginning of the second command word half, which is different from the first start bit wherein a checking apparatus using the value of the start bit (lsb, 1sb') to check whether a command entry address indicates the beginning of a command word and, if there is no beginning of a command word but rather the second start bit, outputting a signal.

## Revendications

1. Procédé de détection d'une adresse de lancement d'instruction correcte lors de l'utilisation de mots d'instruction longs et de mots d'instruction demi-longs, chaque mot d'instruction comportant un premier bit de début prédéterminé (lsb),
**caractérisé par le fait que** des mots d'instruction longs comportent un deuxième bit de début prédéterminé (lsb') au début de la deuxième moitié de mot d'instruction, lequel deuxième bit de début est différent du premier bit de début, un dispositif de vérification vérifiant à l'aide de la valeur du bit de début (lsb, lsb') si une adresse de lancement d'instruction donne le début d'un mot d'instruction et délivrant un signal s'il ne s'agit pas du début d'un mot d'instruction mais du deuxième bit de début.
